# EUROPEAN PATENT SPECIFICATION

(11) **EP 0 535 002 B1**
(45) Date of publication and mention of the grant of the patent: **24.01.1996**
(21) Application number: 91909735.2
(22) Date of filing: 21.05.1991
(51) Int. Cl.: H01S 3/06

(54) **ERBIUM-DOPED FIBRE AMPLIFIER WITH SHAPED SPECTRAL GAIN**
ERBIUMDOTIERTE FASERVERSTÄRKER MIT MODIFIZIERTER SPEKTRALER VERSTÄRKUNG
AMPLIFICATEUR A FIBRE DOPEE D'ERBIUM ET A GAIN SPECTRAL MODIFIE

(30) Priority: 21.05.1990 GB 9011330
(43) Date of publication of application: 07.04.1993
(73) Proprietor: THE UNIVERSITY OF SOUTHAMPTON, Southampton, Hampshire SO9 5NH (GB)
(72) Inventor: PAYNE, David Neil, Southampton, Hampshire SO3 5QG (GB); MORKEL, Paul Roos, Southampton, Hampshire SO5 7PH (GB); LAMING, Richard Ian, Southampton, Hampshire SO3 5QZ (GB); TACHIBANA, Masao, c/o Seiko Instruments Inc., Matsudo-shi, Chiba 271 (JP)
(74) Representative: Abbie, Andrew Kenneth
(86) International application number: GB9100797
(87) International publication number: WO9118434

(56) References cited:
- EP-A- 0 260 654
- EP-A- 0 426 222
- US-A- 3 988 697
- IEE PROCEEDINGS J. OPTOELECTRONICS vol. 132, no. 5, October 1985, STEVENAGE GB pages 277 - 286; R.C. YOUNGQUIST ET AL.: 'All-fibre components using periodic coupling ' cited in the application see abstract see page 278, right column, last paragraph; figure 3 SA 47706 030, see page 283, right column, paragraph 2
- OPTICAL FIBER COMMUNICATION CONFERENCE 1990 TECHNICAL DIGEST SERIES vol. 1, January 22, 1990, WASHINGTON, US page 26; H. YANAGAWA ET AL.: 'Low loss in-line single-mode filter. [Paper TUG3] ' cited in the application see the whole document
- ELECTRONICS LETTERS. vol. 26, no. 10, May 10, 1990, STEVENAGE GB pages 661 - 662; H. MASUDA ET AL.: 'High gain two stage amplification with erbium-doped fibre amplifier ' see abstract see page 661, left column, line 27 - line 29; figure 1 SA 47706 030
- ELECTRONICS LETTERS. vol. 25, no. 14, July 6, 1989, STEVENAGE GB pages 910 - 911; C.G. ATKINS ET AL.: 'High-gain, broad spectral bandwidth erbium-doped fibre amplifier pumped near 1.5 mum ' cited in the application

## Description

The present invention relates to optical fibre amplifiers, and to optical fibre telecommunication links for transmitting wavelength division multiplexed signals incorporating an optical fibre amplifier. Rare-earth-doped optical fibre amplifiers, particularly the erbium-doped fibre, have recently attracted very considerable attention in the field of optical fibre communications. See, for example, "Low noise erbium-doped fibre amplifier operating at 1.54 µm", Electronics Letters, Vol. 23, No. 19, p. 1026, 1987 and United Kingdom patent application 2180392. The erbium-doped fibre amplifier (EDFA) conveniently operates in the preferred telecommunications spectral-window located at a wavelength of 1.55µm. In addition, it has been shown to have high polarisation-insensitive gain (greater than 30dB), low crosstalk between signals at different wavelengths, good saturation output power (>1mW) and a noise figure close to the fundamental quantum limit (approximately 3dB). The excellent noise characteristics potentially allow hundreds of amplifiers to be incorporated along the length of a fibre telecommunication link, which could then span more than 10,000km. Compared to the alternative of a transmission link with electronic repeaters, an all optical link has the merit that it is transparent to the transmission-code format and bit-rate. It can thus be uprated by changing only the transmitter and receiver, and not the repeaters.

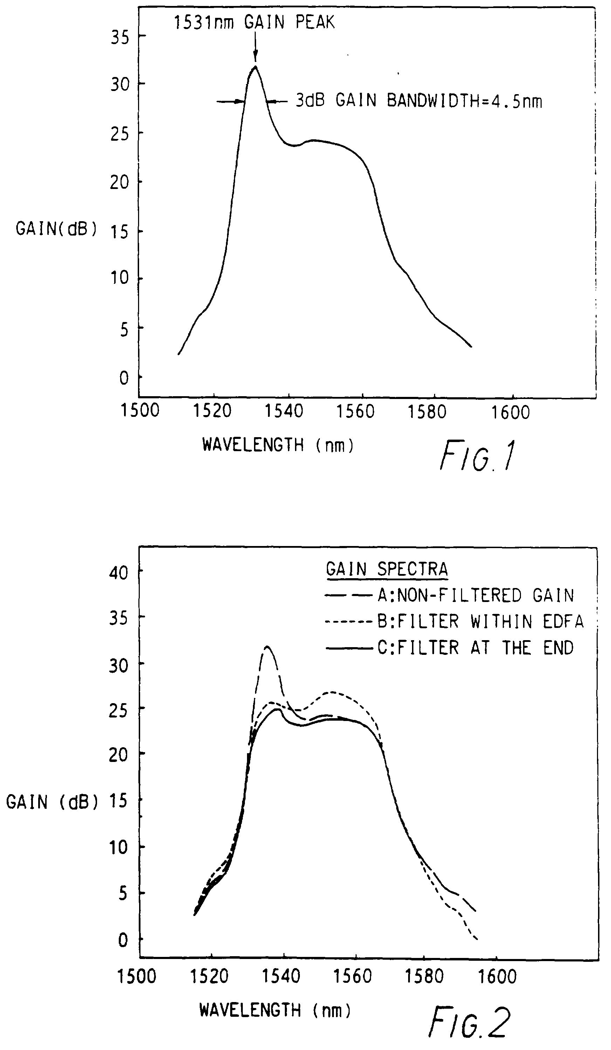

Despite its generally-excellent characteristics, the erbium-doped-fibre amplifier has one major disadvantage, namely its spectral linewidth. The 1:55µm telecommunications window is approximately 20nm wide and an ideal amplifier would have a flat spectral-gain across the full window. Although the broad fluorescence linewidth of ions in glass provides wideband amplification, their spectral-gain characteristics are often irregular. For example, the fluorescence band of erbium-doped fibre amplifiers (EDFA) is due to the radiative transition between the ⁴I_{13/2} to ⁴I_{15/2} energy levels. Both of these levels are broadened and Stark-split to produce a manifold of contributing levels. Transitions between the ⁴I_{13/2} manifold and the ⁴I_{15/2} manifold are not equally likely and, in particular, the transition between the two levels corresponding to the peak gain wavelength has the highest probability. This wavelength varies from 1530nm to 1535nm, depending on the host glass material. It is therefore well-known that the spectral gain of an EDFA has a peak response as shown in Figure 1. It can be seen that because of the irregular shape of the spectral gain, the amplifier has a 3dB gain-bandwith of only 4.5nm.

If it is intended to use the amplifier in a telecommunications system which employs a single signal-wavelength corresponding to the peak gain of the erbium amplifier (1535nm in the case of a germano-silicate host glass), the narrow spectral gain is no disadvantage and may indeed be an advantage. However, if the telecommunication link is required to operate at a number of optical wavelengths and to exploit fully the available low-loss window offered by current telecommunications fibres, the large variation in gain across the spectrum can cause problems. Referring to Figure 1 (plotted for an alumino-silicate host glass), it is clear that operating between wavelengths of 1540nm and 1560nm offers a broad gain-plateau with a gain reduced by some 8dB relative to that obtainable at the peak. It is perfectly possible to operate in this reduced-gain plateau, see R. Welter, R.I. Laming, R.S. Vodhanel, W.B. Sessa, M.W. Maeda and R.E. Wagner, "Performance of an erbium-doped fibre amplifier in a 16-channel coherent broadcast network experiment" Proc. CLEO, Paper PD22, Baltimore 1989. However, the presence of an adjacent high-gain region at 1531nm presents a number of disadvantages, as follows:-
1. Laser oscillation. A high-gain optical amplifier tends to oscillate owing to the existence of feedback from unavoidable reflections and backscatter from the fibre transmission link. Typically, the gain should be limited to around 30dB in practical applications. Thus, in an amplifier having a peaked response, the maximum gain at the peak must be limited to 30dB to avoid oscillation, thus giving a gain elsewhere in the spectrum of little over 20dB.
2. Poor pumping efficiency. In a high-gain optical amplifier operating in the small-signal regime, the pump power required to achieve a given gain is dominated by the build up of unwanted amplified-spontaneous-emission (ASE). Spontaneous emission occurs throughout the length of the amplifier but, in particular, only that which originates at the input of the amplifier experiences the full gain through the amplifier. Thus spontaneous emission when subject to a high gain contributes a substantial light level at the amplifier output and can saturate the amplifier output section. Under these ASE-induced saturation conditions, the pump efficiency (i.e. gain/pump power) rapidly decreases and much of the available pump power is converted to ASE at the output of the amplifier, rather than contributing to the gain of the signal. The amount of ASE generated is very nearly proportional to the amplifier gain. Thus the situation is worsened if a high-gain spectral region exists adjacent to that in which it is wished to dperate. Taking the example of the gain spectrum shown in Figure 1, to obtain a 24dB gain at 1550nm we cannot avoid having a gain of 32dB at 1531nm and must accept the large value of ASE at this wavelength. Thus a substantial amount of the pump power is wasted in supplying ASE power at the gain peak of 1531nm and this leads to poor pump efficiency. Put another way, to obtain a 24dB amplifier, we must pump at a rate appropriate to a 32dB amplifier.
3. Increased spontaneous-spontaneous beat noise. Apart from reduced pump efficiency, the presence of a large level of ASE at an adjacent wavelength to the signal will contribute a higher level of spontaneous-spontaneous beat noise. This will degrade the amplifier noise figure, particularly under small-signal input conditions.
4. Saturation problems. For wavelength-division multiplexed signals, difficulties will be experienced in using an amplifier with widely-differing gain for each of the different signal wavelength-channels. A danger exists of the high-gain channel at 1531nm saturating the amplifier and thus recucing the gain for all the other channels. Saturation can also lead to increased interchannel crosstalk.

All of the above problems would be alleviated if the amplifier had a perfectly-flat spectral gain. The local environment for the erbium ion has a considerable effect on its gain spectrum and it is well known that an alumino-silicate host glass provides a broader gain spectrum. Previous work has further smoothed this spectrum by use of a pump wavelength of 1.48µm and careful choice of pump power, C.A. Atkins, J.F. Massicott, J.R. Armitage, R. Wyatt, B.J. Ainslie and S.P. Craig-Ryan, "High-gain broad spectral bandwidth erbium-doped -fibre amplifier pumped near 1.5µm", Electronics Letters, Vol. 25, pp. 910-911, 1989. However, this was achieved at the expense of a lower value of population inversion, reduced pump efficiency and a higher noise figure.

The present invention which is applicable to optical amplifiers for amplifying optical signals throughout a spectral window comprising a length of waveguide means having a gain spectrum in said window having a peak, has as its object reducing gain at the peak to thereby modify the overall gain spectrum in said window.

EP-A-426222 which was published on May 8th 1991 and therefore forms part of the state of the art under EPC Article 54(3) relates to EDFA's and discloses the use of a further dopant distributed along the length of the erbium doped fibre acting as a 'filter' at the wavelength of the peak to modify the overall gain spectrum as aforesaid.

The present invention provides an optical amplifier for amplifying optical signals throughout a spectral window, comprising a length of optical waveguide means having a gain spectrum in said window having a peak, characterised in that an optical band-rejection filter, the band-rejection of which is substantially matched to the wavelength of said peak, is disposed at at least one location along the length of said waveguide means and spaced from the ends thereof for reducing gain at said peak wavelength to thereby modify the overall gain spectrum in said window.

The band rejection filter may comprise a portion of the waveguide means urged into contact with a grating to cause periodic perturbation thereof.

Alternatively, the band rejection filter may comprise a dielectric interference filter.

The band rejection filter may include a coloured glass absorption filter or a Fabry-Perot filter.

The band rejection filter may comprise a resonant filter.

The waveguide means may comprise a planar waveguide or a rare-earth doped optical fibre. In the latter case, the band rejection filter may comprise a filter chip embedded in said fibre.

Thus we propose a form of spectral gain-shaping accomplished by incorporating an optical filter at some position along the length of the amplifier. It can be shown that a relatively flat, wide spectral-gain can be achieved by this means and the performance achieved contrasted with that obtained by placing a filter at the output of the amplifier. This latter approach does not alleviate the disadvantages as outlined at 2 and 4 above.

The invention also includes an optical fibre telecommunication link for transmitting wavelength division multiplexed optical signals, said link having incorporated along its length at least one optical amplifier as defined in the last but six preceding paragraph.

In order that the invention may be well understood some embodiments thereof, which are given by way of example only, will now be described with reference to the accompanying drawings, in which:
Figure 1 shows the gain spectrum of a conventional EDFA;
Figure 2 shows the gain spectra of the EDFA of Figure 1 utilising a filter within the EDFA (curve B) and a filter at the end of the EDFA (Curve C);
Figure 3 shows the build-up of ASE along the length of an EDFA;
Figure 4 shows the gain and saturation characteristics of an EDFA at 1531nm;
Figure 5 shows schematically a first EDFA in accordance with the invention;
Figure 6 shows an alternative form of EDFA in accordance with the invention; and
Figure 7 illustrates planar-waveguide EDFA apparatus analogous to the fibre-based amplifiers of Figures 5 and 6.

The wideband optical-fibre amplifier described below consists of at least two sections of optical fibre which contain a proportion of rare-earth dopant ions (e.g. Er³⁺) within which the core, and band-rejection filters operating at the peak wavelength of the gain spectrum inserted between each section of fibre. When pumped at a suitable wavelength (e.g. 980nm), each section of optical fibre is capable of optical amplification by means of stimulated emission from excited rare-earth ions, with gain spectrum as shown in Figure 1.

The attenuation of the band rejection filter is chosen so that it exactly cancels the larger gain at the peak wavelength and thus modifies the overall gain spectrum to a more uniform shape as shown in Figure 2 (Curve B). This does not necessarily mean that the attenuation of the filter should be equal to the difference in the spectral gain of the fibre amplifier between the peak and plateau wavelengths, as would be required for a filter placed at the amplifier output. The filter incorporated within the fibre amplifier changes the spectral-gain profile in a different way owing to its suppresion of the ASE power. This will be discussed further below. The number of sections of fibre and their lengths are chosen to ensure that the sections are not saturated by the ASE (or injected signal if this is present) at the peak wavelength of the gain spectrum.

If the filter spectral responses are chosen correctly, this configuration modifies the gain and saturation characteristics of the amplifier to be uniform over the whole range of the gain spectrum of the particular rare-earth ion used. As noted above, such an optical amplifier is well-suited for wavelength-division-multiplexing or optical-frequency-division multiplexing, as it provides equal amplification for all signals within the amplifier bandwidth.

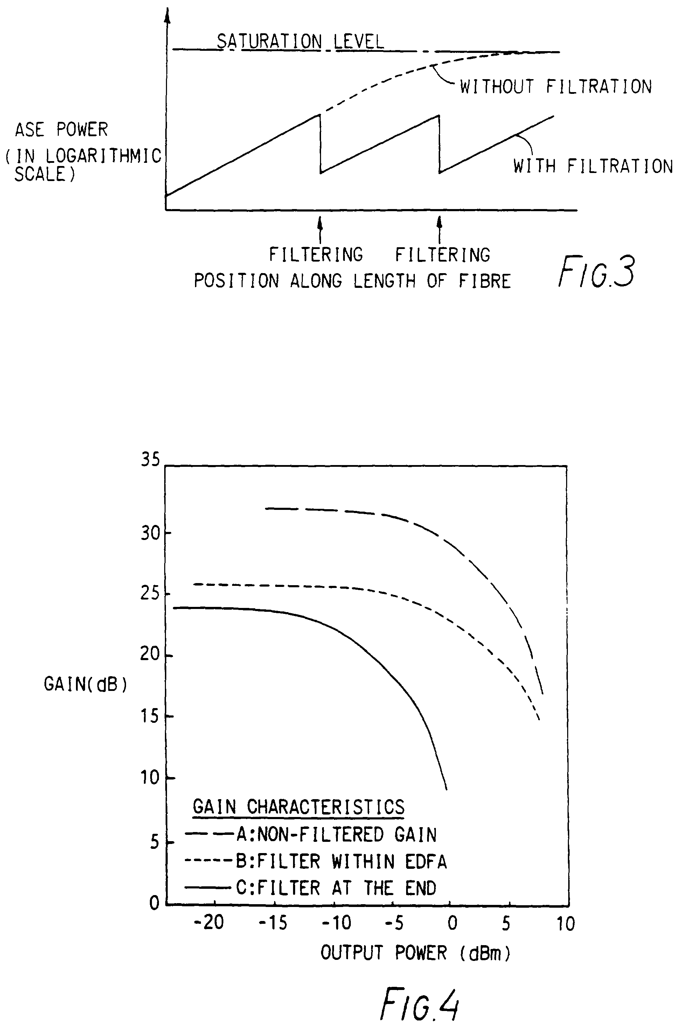

As indicated below, the ASE is very nearly proportional to the amplifier gain and therefore the ASE spectrum is very similar to the gain spectrum having a preponderance of power at the peak. Filtering at the peak wavelength of the gain spectrum with a filter placed within the amplifier reduces most of the spectral power of the ASE in an efficient manner and delays the onset of ASE-induced saturation, resulting in good pump efficiency. This is because the exponential build-up of the ASE at this wavelength along the length of the fibre is suppressed at the end of each fibre section and thus the ASE power is maintained at a low level (as shown schematically in Figure 3 where two band rejection filters are disposed at respective spaced locations along the length of the fibre and spaced from the ends thereof), rather than growing to a high level.

A substantial amount of the population of rare-earth ions in the excited state is therefore saved from stimulated emission caused by ASE and reserved for the amplification of signal. This results in an increase in gain over the whole range of the gain band within the section of fibre after the filter. The filter loss spectrum should be designed to flatten the spectral gain taking account of the gain obtained in exchange for the ASE power. Thus the filter within the fibre amplifier improves the pumping efficiency and results in increased gain availability at wavelengths outside the rejection band of the filter. This effect also contributes to the flattening of the spectral gain and is illustrated in Figure 2 (Curves A & B), which compare to the spectral gain in an EDFA with and without filtering. It is to be noted that placing the filter at the output of the amplifier does not give the advantage of increased gain outside of the filter stop-band, since the filter has no effect on the build up of ASE within the amplifier. Furthermore, since the effect of the filter at the output is purely passive, the output power within the filter band is simply reduced by the filter attenuation. This causes an accompanying reduction of the amplifier saturation power within this band.

This last point is illustrated by Figure 4 where the amplifier gain characteristics at 1531nm with and without internal filtering are given (Curves A & B). From the figure it can be seen that 3dB gain compression occurs for output powers around 1mW in both cases, thus defining an output saturation power of 0dBm.

By contrast, taking the calculated example of an optical notch filter with a Lorentzian spectrum applied at the output of the same EDFA, it can be seen that to obtain a 3dB-bandwith of ≈30nm, the filter attenuation should be 8dB at 1531nm, with a 3dB-bandwidth of 4nm. The small-signal gain spectrum for such a system is given in Figure 2 (Curve C). As expected, a smooth gain spectrum is obtained, but with no increase in gain at longer wavelengths. However, the gain saturation characteristics at 1531nm are markedly different, as shown in Figure 4 (Curve C). A 3dB gain-compression now occurs for output powers around only -8dBm owing to the attenuation of the filter (i.e. 8dB) at the output of the EDFA.

There are numerous possible implementations of the optical filter. One such is wavelength-selective resonant coupling from the propagating core mode of the fibre to a cladding leaky mode. Generally, it is possible to induce strong coupling between orthogonal modes of a waveguide by means of a periodic perturbation along the propagation axis of the waveguide, R.C. Youngquist et al: "All-fibre components using periodic coupling", IEE Proceedings, Vol. 132, Pt. J, No. 5, p.277, 1985. The resonant condition is as follows:
β - β' = 2π/L where L is the period of the perturbation, and β and β' are the propagation constants of the two modes which couple to each other.

This resonant condition is satisfied only at finite numbers of discrete wavelengths owing to the dispersive property of the modes. To implement a notch filter using this phenomenon, the propagating core mode can be coupled to one of the cladding modes. As cladding modes are leaky in the case of a fibre coated with a high-index polymer, the portion of power which coupled to the cladding mode is eventually lost in the coating. Thus an optical filter is formed at a resonant wavelength which can be selected by changing the period of the applied perturbation. The attenuation at the filter stop-band can be adjusted by changing the degree of perturbation. The advantage of this type of optical filter is that it does not require insertion of any optical components between the sections of rare-earth doped fibre which may cause excess loss or reflections at both signal and pumping wavelengths.

It should be understood that any of the well-known optical filtering techniques could be used to implement the invention.

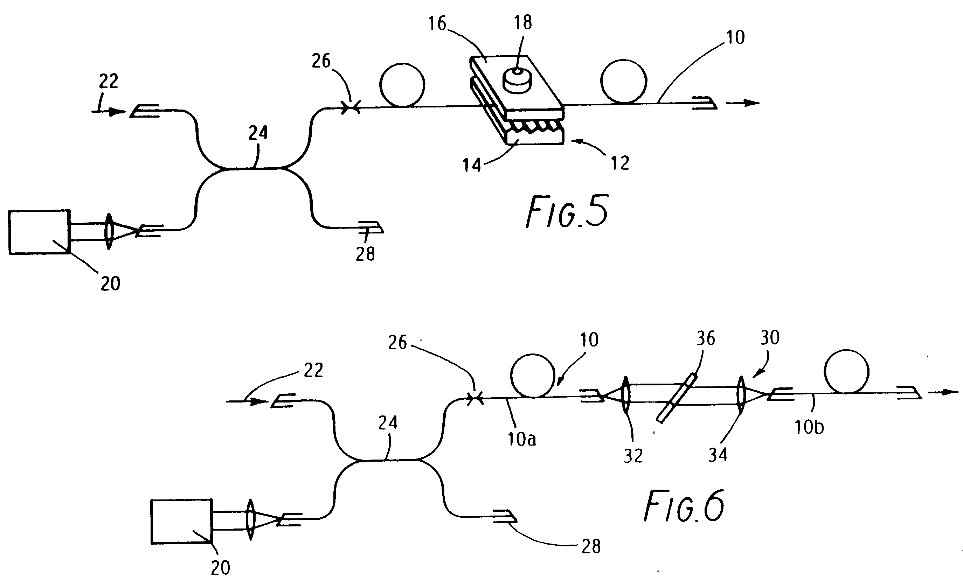

One possible implementation of the invention is shown in Figure 5.

A rare-earth-doped optical fibre 10 was chosen to be single-mode at the amplification wavelength which is 1.55µm in the case of the EDFA. The fibre 10 used had an erbium concentration of 25ppm in the core, a numerical aperture of 0,14 and a cutoff wavelength of 945nm. The core composition was 4mol % Al₂O₃ - 96mol % SiO₂. In this case the fibre 10 was continuous and a single optical filter 12 was applied at approximately the centre by periodically perturbing the fibre. The filter 12 consisted of a grating 14 with a period of 775µm which satisfied for this particular fibre the resonant condition for coupling between core and cladding modes at the peak wavelengths of the gain spectrum. The fibre 10 was sandwiched between the grating 14 and a flat plate 16, and a load 18 applied. This mechanism perturbs the fibre 10 with a periodic deformation matching that of the grating 14 and achieves an effective core-cladding coupling.

There are three important parameters which must be adjusted to achieve optimum gain-flattening. These are the resonant wavelength, the attenuation and the bandwidth of the filter 12. The required values can be obtained by adjusting the period of the grating 14, the magnitude of the load 18 (i.e. the deformation of the fibre) and the total length of the grating 14, respectively.

Pump light from a light source 20 and signal light 22 were coupled into the fibre 10 through a dichroic fibre-coupler 24 with a large coupling ratio at the pumping wavelength and a small one at the signal wavelength. The fibre 10 is spliced to one coupler output 26, while the other coupler output 28 has a non-reflective termination 28. The results obtained are shown in Figure 2 (Curve A & B), which compare the spectral gain of the EDFA for the same pump power both before and after filtering. The peak of the gain is substantially reduced and this gain becomes available within the plateau, thus increasing the gain in this region. The filtered spectrum is substantially flat over a 30nm bandwidth.

Another possible implementation of the invention is shown in Figure 6. Those parts of EDFA shown in Figure 6 which are the same as that of Figure 5 have been given the same reference numerals. The fibre 10 is separated into two sections 10a and 10b by a multilayer filtering apparatus 30 consisting of two coupling lenses 32,34 and a dielectric interference filter 36. This filter 36 is designed to cancel out the larger gain of the fibre 10 around the peak wavelength and to be transparent elsewhere. A thin filter chip could also be embedded into a fibre without coupling lenses as described in H. Yanagawa et al: "Low loss in-line single-mode filter", Proc. Conference on Optical Fibre Communications (OFC '90), San Francisco, Paper TUG3, February 1990. The rest of the configuration is the same as the implementation described above.

It should be understood that there are several further implementations of the basic idea within the scope of the invention, some of which are outlined as follows.

Any of the well-known techniques for producing an optical band-stop filter can be incorporated into the fibre at appropriate locations along its length and spaced from its ends. These can include, for example, thin coloured-glass filters, Fabry-Perot filters and various other forms of resonant filter (e.g. Bragg filters) applied to the fibre. The requirement for a filter is that it should introduce minimal loss at wavelengths outside the band-stop region, as well as minimal reflection. Both these factors can adversely affect amplifier performance. Thus any filter-chip embedded within the fibre should be sufficiently thin to cause minimal loss and discrete components inserted within a gap in the fibre should be angled to prevent reflections.

It should also be understood that whereas the discussion above refers to the erbium-doped fibre amplifier, the concept of gain-shaping is applicable to any optical amplifier comprising a length of waveguide means having a gain spectrum having a peak, including those constructed using other rare-earths such as neodymium.

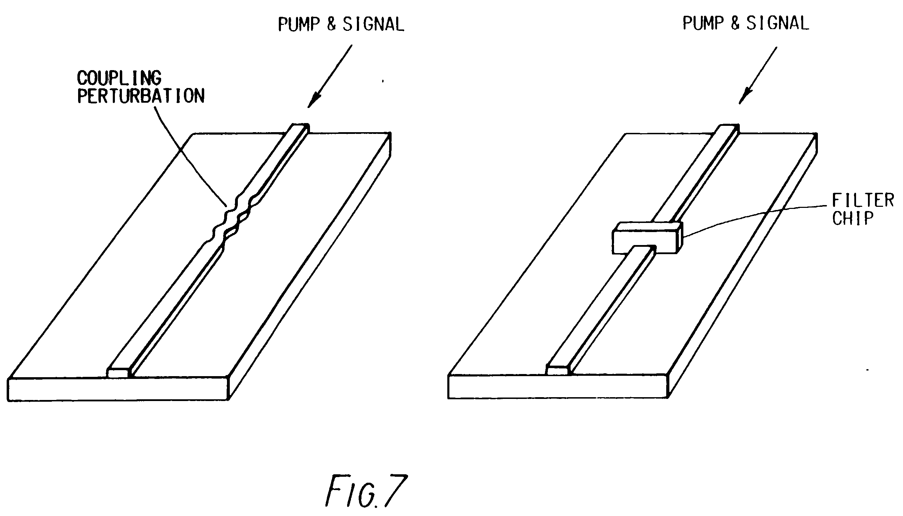

The description above largely emphasises fibre amplifiers. However, the gain-shaping concept is equally applicable to rare-earth-doped amplifiers constructed in a planar configuration. An example is given in Figure 7 where the rare-earth-doped rib waveguide on a suitable substrate is shown. In this case the filter can be incorporated within the length of the amplifier by similar techniques to those described for optical fibres. However, additional opportunities now exist to deform the waveguide permanently by using photolithography to define a meandering section or a periodic perturbation of the guide edge and thus produce a filter. The invention also applies to buried waveguides and to those made by ion exchange. Similar filtering techniques could also be applied to semiconductor injection laser amplifiers.

## Claims

1. An optical amplifier for amplifying optical signals throughout a spectral window, comprising a length of optical waveguide means (10) having a gain spectrum in said window having a peak, characterised in that an optical band-rejection filter (12, 30), the band-rejection of which is substantially matched to the wavelength of said peak, is disposed at at least one location along the length of said waveguide means and spaced from the ends thereof for reducing gain at said peak wavelength to thereby modify the overall gain spectrum in said window.

2. An amplifier according to claim 1, wherein said band-rejection filter (12) comprises a portion of the waveguide means (10) urged into contact with a grating (14) to cause periodic perturbation thereof.

3. An amplifier according to claim 2, wherein said portion is urged into contact with said grating (14) under the action of a load (18).

4. An amplifier according to claim 1, wherein said band-rejection filter (12) comprises a dielectric interference filter.

5. An amplifier according to claim 1, wherein said band-rejection filter includes a coloured glass absorption filter or a Fabry-Perot filter.

6. An amplifier according to any one of claims 1 to 5, wherein said waveguide means is a planar waveguide or a rare-earth doped optical fibre.

7. An amplifier according to claim 1, wherein said band-rejection filter comprises a resonant filter.

8. An amplifier according to claim 1, wherein said waveguide means comprises a rare-earth doped optical fibre and said band-rejection filter comprises a filter chip embedded in said fibre.

9. An optical fibre telecommunication link for transmitting wavelength division multiplexed optical signals, said link having incorporated along its length at least one optical amplifier according to any one of claims 1 to 8.

## Patentansprüche

1. Optischer Verstärker zum Verstärken von optischen Signalen in einem Spektralfenster, der eine Strecke einer Lichtwellenleitereinrichtung (10) mit einem Verstärkungsspektrum im Fenster mit einem Peak aufweist, dadurch gekennzeichnet, daß ein optisches Sperrfilter (12, 30), dessen Bandsperrung im wesentlichen der Wellenlänge des Peaks entspricht, an mindestens einer Stelle auf der Strecke der Wellenleitereinrichtung angeordnet und in einem Abstand von deren Enden zum Verringern der Verstärkung bei der Peakwellenlänge und dadurch zum Modifizieren des Gesamt-Verstärkungsspektrums im Fenster angebracht ist.

2. Verstärker nach Anspruch 1, bei dem das Sperrfilter (12) einen Teil der Wellenleitereinrichtung (10) enthält, der mit einem Gitter (14) in wirkungsvollen Kontakt gebracht ist, wodurch eine periodische Störung darin hervorgerufen wird.

3. Verstärker nach Anspruch 2, bei dem der Teil unter Verwendung einer Last (18) wirkungsvoll in Kontakt mit dem Gitter (14) gebracht wird.

4. Verstärker nach Anspruch 1, bei dem das Sperrfilter (12) ein dielektrisches Interferenzfilter aufweist.

5. Verstärker nach Anspruch 1, bei dem das Sperrfilter ein Buntglas-Absorptionsfilter oder ein Fabry-Perot-Filter aufweist.

6. Verstärker nach einem der Ansprüche 1 bis 5, bei dem die Wellenleitereinrichtung ein planarer Wellenleiter oder eine mit seltenen Erden dotierte optische Faser ist.

7. Verstärker nach Anspruch 1, bei dem das Sperrfilter ein resonantes Filter aufweist.

8. Verstärker nach Anspruch 1, bei dem die Wellenleitereinrichtung eine mit seltenen Erden dotierte optische Faser aufweist und das Sperrfilter einen in die Faser integrierten Filterchip aufweist.

9. Optische Fasertelekommunikationsverbindung zum Übertragen von durch Wellenlängenteilung multiplexierten optischen Signalen, wobei in die Verbindung auf ihrer Länge mindestens ein optischer Verstärker nach einem der Ansprüche 1 bis 8 eingeschaltet ist.

## Revendications

1. Amplificateur optique pour amplifier des signaux optiques dans toute une fenêtre spectrale, comprenant une longueur d'un moyen formant guide optique (10) présentant dans ladite fenêtre un spectre de gain comportant un pic, caractérisé en ce qu'un filtre optique (12, 30) de réjection de bande, dont la réjection de bande est adaptée sensiblement à la longueur d'onde dudit pic, est disposé en au moins un endroit le long de la longueur dudit moyen formant guide d'onde et est espacé des extrémités de celui-ci afin de réduire le gain à ladite longueur d'onde de pic pour modifier ainsi le spectre de gain global dans ladite fenêtre.

2. Amplificateur selon la revendication 1, dans lequel ledit filtre (12) de réjection de bande comprend une partie du moyen formant guide d'onde (10) poussée contre un réseau (14) pour provoquer une perturbation périodique de ce dernier.

3. Amplificateur selon la revendication 2, dans lequel ladite partie est poussée contre ledit réseau (14) sous l'action d'une charge (18).

4. Amplificateur selon la revendication 1, dans lequel ledit filtre (12) de réjection de bande comprend un filtre diélectrique antiparasites.

5. Amplificateur selon la revendication 1, dans lequel ledit filtre de réjection de bande comprend un filtre d'absorption en verre coloré ou un filtre Fabry-Perot.

6. Amplificateur selon l'une quelconque des revendications 1 à 5, dans lequel ledit moyen formant guide-d'onde est un guide d'ondes plan ou une fibre optique dopée avec des terres rares.

7. Amplificateur selon la revendication 1, dans lequel ledit filtre de réjection de bande comprend un filtre résonnant.

8. Amplificateur selon la revendication 1, dans lequel ledit moyen formant guide d'ondes comprend une fibre optique dopée avec des terres rares et ledit filtre de réjection de bande comprend une microplaquette formant filtre et noyée dans ladite fibre.

9. Liaison de télécommunication à fibre optique pour transmettre des signaux optiques multiplexés par division de longueur d'onde, ladite liaison comportant, incorporé le long de sa longueur, au moins un amplificateur optique selon l'une quelconque des revendications 1 à 8.
